# FASCICULE DE BREVET EUROPEEN

(11) **EP 3 385 195 B1**
(45) Date de publication et mention de la délivrance du brevet: **09.09.2020**
(21) Numéro de dépôt: 18165594.5
(22) Date de dépôt: 04.04.2018
(51) Int. Cl.: B65D 90/10, B60P 3/22

(54) **CITERNE COMPORTANT UN DISPOSITIF D'OUVERTURE/FERMETURE D'UN COUVERCLE DE TROU D'HOMME**
ZISTERNE, DIE EINE ÖFFNUNGS-/SCHLIESSVORRICHTUNG EINES DECKELS EINER EINSTIEGSÖFFNUNG UMFASST
CISTERN INCLUDING A DEVICE FOR OPENING/CLOSING A MANHOLE COVER

(30) Priorité: 05.04.2017 FR 1752962
(43) Date de publication de la demande: 10.10.2018
(73) Titulaire: Etablissements MAGYAR, 21000 Dijon (FR)
(72) Inventeur: MAGYAR, Daniel, 21000 DIJON (FR); MAGYAR, Laurent, 75001 PARIS (FR)
(74) Mandataire: Cabinet Camus Lebkiri

(56) Documents cités:
- FR-A1- 2 627 468
- JP-U- H0 721 617
- US-A- 3 821 935

## Description

### DOMAINE TECHNIQUE

La présente invention se rapporte au domaine des citernes utilisées de manière générale pour le stockage et le transport de produits gazeux, liquides ou encore pulvérulents.

L'invention concerne plus particulièrement une citerne pour le stockage et le transport de produits gazeux, liquides ou encore pulvérulents comportant un dispositif d'ouverture/fermeture d'un couvercle de trou d'homme.

### ETAT DE LA TECHNIQUE

Les trous d'homme dans les citernes ou conteneurs sont nécessaires pour le remplissage, l'inspection, le lavage et la maintenance des citernes.

Ces trous d'homme sont généralement obturés lors de l'utilisation de la citerne par des couvercles amovibles, c'est-à-dire que l'on peut ouvrir et fermer en fonction des besoins.

Les solutions actuelles consistent à dégager suffisamment le couvercle par rotation (de l'ordre de 120° d'ouverture maximum) pour faciliter le passage et la mise en place d'un cône de chargement au-dessus du trou d'homme ou encore un cône de lavage. Toutefois, le couvercle en position ouverte génère un encombrement supplémentaire par rapport aux dimensions hors-tout de la citerne, ce qui peut se révéler problématique lors de certaines opérations, notamment de chargement, de déchargement, de lavage, de maintenance et de manipulation, lorsque la citerne doit être manutentionnée ou positionnée sous un bâti dont la hauteur de chargement est limitée. Les documents US 3 821 935 et FR 2 627 468 divulguent des citernes selon le préambule de la revendication 1.

### EXPOSE DE L'INVENTION

Dans ce contexte, l'invention vise à proposer une citerne comportant un dispositif d'ouverture/fermeture amélioré d'un couvercle de trou d'homme permettant de résoudre les problèmes précités et permettant de faciliter le passage, le remplissage ou le nettoyage, d'une citerne, et notamment lorsque la citerne comporte des obstacles à proximité des trous d'homme empêchant une ouverture correcte des couvercles.

A cette fin, l'invention concerne une citerne pour le transport de produits gazeux, liquides ou pulvérulents suivant les caractéristiques de la revendication 1. Elle comporte:
- une cuve dans laquelle un trou d'homme est ménagé, ledit trou d'homme présentant une embase solidaire de la cuve et un couvercle pour obturer le trou d'homme, ledit couvercle étant amovible entre une position d'ouverture et une position de fermeture,
- un dispositif d'ouverture/fermeture dudit couvercle,
ledit dispositif d'ouverture/fermeture présente :
- une partie fixe solidaire de l'embase du trou d'homme ;
- une partie mobile solidaire du couvercle ;
- un élément d'extension mobile et reliant mécaniquement la partie fixe à la partie mobile ;
- des moyens pour réaliser une liaison pivot et une liaison glissière entre le couvercle et l'embase du trou d'homme ;
ledit élément d'extension coulissant verticalement par rapport à ladite partie fixe solidaire de l'embase du trou d'homme, entre une position basse et une position haute;
- la partie mobile solidaire du couvercle coulisse verticalement par rapport à l'élément d'extension entre une position basse et une position haute ;
- la partie mobile solidaire du couvercle est mobile en rotation par rapport à l'élément d'extension.

La citerne selon l'invention peut également présenter une ou plusieurs des caractéristiques ci-après prises individuellement ou selon les combinaisons techniquement possible :
- la citerne comporte un obstacle positionné autour du trou d'homme et l'encombrement dudit dispositif d'ouverture/fermeture est inférieur à la hauteur de l'obstacle, lorsque le couvercle est en position de fermeture ;
- ledit obstacle est un bac de récupération des fluides et/ou un dispositif de protection du trou d'homme ;
- le dispositif d'ouverture/fermeture du couvercle présente une cinématique d'ouverture du couvercle apte à contourner ledit obstacle positionné autour du trou d'homme ;
- ledit couvercle présente une ouverture à 180° par rapport à sa position de fermeture ;
- ladite citerne est un véhicule citerne, ou une caisse mobile citerne, ou un conteneur citerne ou un wagon citerne.

### BREVES DESCRIPTION DES FIGURES

D'autres caractéristiques et avantages de l'invention ressortiront plus clairement à la lecture de la description détaillée qui suit, en référence aux figures annexées suivantes :
La figure 1 est une vue d'ensemble d'un trou d'homme de citerne comportant un dispositif d'ouverture/fermeture de couvercle selon l'invention.
La figure 2 est une vue en coupe du dispositif d'ouverture/fermeture selon l'invention illustrant la cinématique d'un premier mode d'ouverture du couvercle.
La figure 3 est une vue en coupe du dispositif d'ouverture/fermeture selon l'invention illustrant une première partie de la cinématique d'un deuxième mode d'ouverture du couvercle.
La figure 4 est une vue en coupe du dispositif d'ouverture/fermeture selon l'invention illustrant une deuxième partie de la cinématique d'un deuxième mode d'ouverture du couvercle.

Pour plus de clarté, les éléments identiques ou similaires sont repérés par des signes de références identiques sur l'ensemble des figures.

### DESCRIPTION DETAILLEE D'AU MOINS UN MODE DE REALISATION

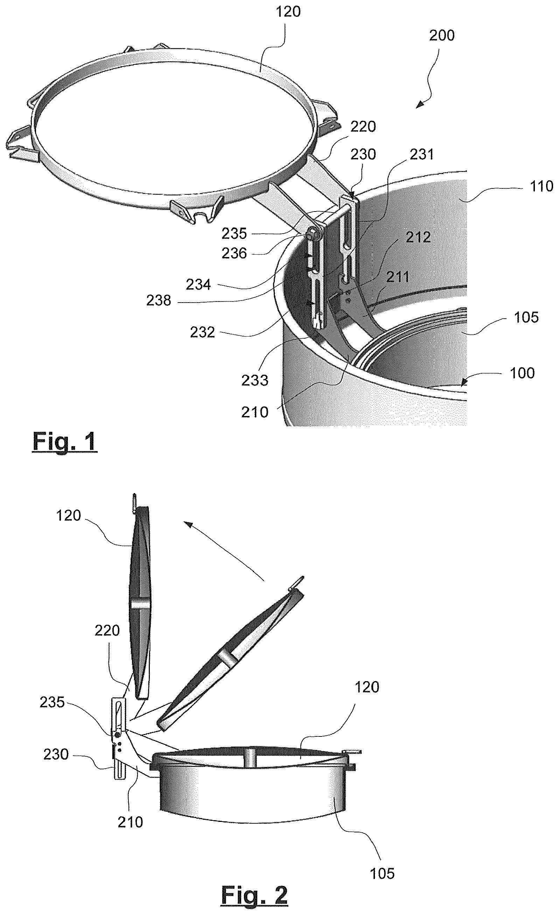

La figure 1 illustre partiellement un trou d'homme 100 formé par une embase 105 et un couvercle 120, le trou d'homme étant ménagé en partie supérieure de la cuve d'une citerne destinée à contenir et à transporter des produits gazeux, liquides ou pulvérulents. Le trou d'homme 100 est utilisé classiquement pour l'inspection, le lavage et la maintenance de la citerne mais permet également le remplissage par le dessus de la citerne notamment via l'utilisation de cône de remplissage.

Lorsque la citerne est transportée ou lorsque celle-ci est remplie, il est d'usage de fermer le trou d'homme 100 par le couvercle 120. Le couvercle 120 est rendu mobile entre une position fermée et une position ouverte par l'intermédiaire d'un dispositif d'ouverture/fermeture 200 selon l'invention, remplissant le rôle d'une charnière améliorée.

La citerne peut comporter des obstacles positionnés dans l'environnement proche du trou d'homme 100 qui peuvent gêner l'ouverture du couvercle 120, comme notamment un bac 110 de récupération des liquides et/ou un dispositif de protection du trou d'homme positionné autour de l'embase 105 du trou d'homme 100. Le bac de récupération et/ou de protection 110 forme une collerette de récupération et/ou de protection autour de l'embase 105. Le bac de récupération et/ou de protection 110 présente une hauteur plus importante que l'embase 105 du trou d'homme 100 et fait saillie par rapport à la surface supérieure de la citerne. Le bac de récupération et/ou de protection 110 est typiquement destiné à éviter le reversement de produits lors du remplissage, ou du lavage.

Le dispositif d'ouverture/fermeture 200 selon l'invention permet d'amener le couvercle 120 au-dessus de l'embase 105 du trou d'homme 100 de manière à l'obturer tout en proposant différentes positions d'ouverture du couvercle 120 qui seront détaillées par la suite, qui permettent notamment d'amener le couvercle 120 au-dessus des obstacles présents. Les différentes cinématiques d'ouverture sont représentées plus spécifiquement aux figures 2 à 4.

Le dispositif d'ouverture/fermeture 200 selon l'invention comporte :
- une première ferrure 210, dite ferrure fixe, formée par deux pattes 211 reliées entre elles par une traverse de renfort 212, la ferrure 210 étant solidaires de l'embase 105 du trou d'homme 100, par exemple par soudage ;
- une deuxième ferrure 220, dite ferrure mobile, formée par deux pattes de fixation solidaires du couvercle 120 par exemple par soudage ;
- un élément d'extension 230 mobile coopérant avec la première ferrure 210 et avec la deuxième ferrure 220, l'élément d'extension 230 étant mobile entre une position basse et une position haute et permettant de rendre le couvercle 120 mobile en rotation (liaison pivot) par rapport à la ferrure fixe 210 mais également en translation (liaison glissière), selon une direction sensiblement verticale.

Selon un exemple de réalisation, la ferrure fixe 210 est formée par pliage d'une tôle métallique, de sorte que les deux pattes 211 et la traverse de renfort 212 forment un élément monobloc en U.

L'élément d'extension 230 est par exemple formé par deux lames rectangulaires 231 positionnées de part et d'autres de la ferrure 210 fixe, et plus spécifiquement au niveau des deux pattes 211.

Les deux lames rectangulaires 231 comportent une première lumière 232, dite lumière inférieure, en forme de trou oblong apte à coopérer avec un élément de guidage 233 solidaire de la ferrure fixe 210. Dans l'exemple de réalisation illustré à la figure 1, la ferrure fixe 210 présente deux éléments de guidage 233 rapportés sur les faces externes des pattes 211. Les deux lames rectangulaires 231 sont mobiles par rapport à la ferrure fixe 210 et guidées par les éléments de guidage 233 qui autorisent uniquement un déplacement rectiligne de l'élément d'extension 230 par rapport à la ferrure fixe 210. Le déplacement rectiligne de l'élément d'extension 230 est selon une direction verticale.

Les deux lames rectangulaires 231 comportent également une deuxième lumière 234, dite lumière supérieure, en forme de trou oblong apte à coopérer avec une broche 235 servant d'élément de liaison entre la ferrure mobile 220 du couvercle 120 et l'élément d'extension 230. La broche 235 est par exemple une pièce cylindrique présentant deux extrémités filetées. La broche 235 traverse les deux lames rectangulaires 231 au niveau de leur lumière supérieure 234 ainsi que la ferrure mobile 220 au niveau de deux orifices ménagés dans les pattes de fixation de la ferrure mobile 220. La broche est maintenue assemblée sur le couvercle 120 par deux boulons 236 vissés de part et d'autre de la broche 235.

La broche 235, et donc le couvercle 120, est mobile en translation à l'intérieur des lumières supérieures 234 des lames rectangulaires 231 de l'élément d'extension 230. Le déplacement de la broche 235 est guidé par la forme rectiligne des lumières supérieures 234. Le couvercle 120 est également mobile en rotation de part la forme cylindrique de la broche 235.

La lumière supérieure 234 des lames rectangulaires 231 de l'élément d'extension 230 comporte également au niveau de son extrémité inférieure un décroché, par exemple en forme en goutte d'eau, marquant une position de référence. La forme particulière de l'extrémité inférieure de la lumière supérieure permet d'éviter à la broche 235 de sortir inopinément de cette position intermédiaire si un certain effort n'est pas appliqué sur la broche 235.

La figure 2 est une vue en coupe du dispositif d'ouverture/fermeture 200 selon l'invention illustrant la cinématique d'un premier mode d'ouverture du couvercle 120. Ce premier mode d'ouverture permet d'ouvrir le couvercle 120 dans une première position intermédiaire P1 en effectuant une simple rotation de celui-ci de l'ordre de 120°. Cette position intermédiaire P1 permet de dégager suffisamment le couvercle 120 du trou d'homme par la réalisation d'une inspection ou d'un chargement classique.

En position fermée, le couvercle 120 repose sur l'embase 105 du trou d'homme 100. Dans cette position fermée, la broche 235 est en position basse dans la lumière supérieure 234 de l'élément d'extension 230, et plus précisément dans la partie en forme de goutte d'eau 238 marquant la position de la broche 235 en position intermédiaire P1. Le couvercle 120 est actionné en rotation dans cette position. L'élément d'extension 230 est également dans en position basse permettant ainsi la fermeture du couvercle 120 sur l'embase 105.

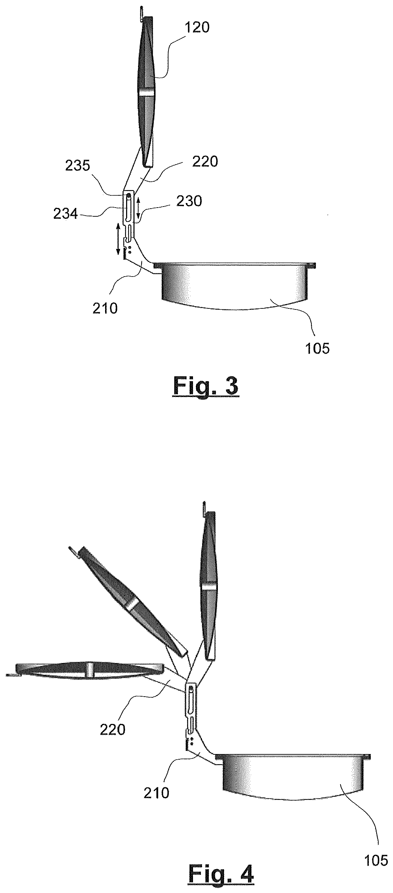

La figure 3 est une vue en coupe du dispositif d'ouverture/fermeture 200 selon l'invention illustrant une partie de la cinématique d'un deuxième mode d'ouverture. La figure 3 illustre plus précisément le passage de la position intermédiaire P1 décrite précédemment à une position intermédiaire P2.

Pour arriver à cette position intermédiaire P2, lorsque le couvercle 120 est en position intermédiaire PA, l'opérateur exerce un effort vertical sur la poignée du couvercle 120 pour le remonter vers lui. Sous cet effort, la broche 235 quitte sa position basse dans la partie inférieure en goutte d'eau de la lumière supérieure 234 pour venir en butée au niveau de la deuxième extrémité de la lumière supérieure 234. Lorsque la broche 235 est en « butée haute » contre l'extrémité de la lumière supérieure 234, le mouvement vertical de l'opérateur entraîne l'élément d'extension 230 qui glisse verticalement par rapport à sa position initiale (position basse) pour venir dans sa position haute, le déplacement de l'élément d'extension 230 étant guidé par les éléments de guidages 233.

Lorsque la broche 235 est en position haute (butée haute) dans la lumière supérieure 234 et que l'élément d'extension 230 est complétement remonté (position haute), c'est à dire que les éléments de guidage 233 sont en position basse (butée basse) dans la lumière inférieure 233, alors l'élément d'extension 230 est dans sa position d'extension maximale et le couvercle 120 est dans sa position intermédiaire P2.

L'opérateur peut alors effectuer une rotation du couvercle 120 vers l'extérieur de manière à dégager le couvercle 120 pour dégager l'accès au trou d'homme 100. Cette partie de la cinématique est illustrée plus précisément à la figure 4.

Dans cette position, le couvercle 120 peut être basculé à 180° par rapport à sa position fermée et à une certaine hauteur de l'embase 105 du trou d'homme 100 par l'utilisation avantageuse de l'élément d'extension 230. Un tel dispositif permet donc de proposer une double cinématique d'ouverture du couvercle 120 dont une des deux cinématiques est capable de contourner ou d'esquiver un obstacle positionné à proximité du trou d'homme 100 comme par exemple un bac de récupération des liquides et/ou un dispositif de protection du trou d'homme. Le maintien en position d'ouverture complète (i.e à 180° par rapport à la position fermée) du couvercle 120 peut être réalisé par un simple positionnement du couvercle 120 sur un appui, par exemple la collerette du bac de récupération et/ou d'un dispositif de protection 110. Ainsi, l'accès au trou d'homme est complétement dégagé ce qui permet de faciliter les opérations de maintenance, de nettoyage, de remplissage, et l'encombrement en hauteur est limité ce qui permet de pouvoir minimiser l'encombrement en hauteur de la citerne et faciliter ainsi la manutention de celle-ci.

Les dimensions des ferrures 210, 220 et de l'élément d'extensions 230 sont déterminées en fonction des dimensions du trou d'homme ainsi qu'en fonction des cinématiques d'ouverture/fermeture désirées répondant à des contraintes d'encombrement existantes sur les citernes dues aux obstacles à proximité des trous d'homme.

Le dispositif d'ouverture/fermeture selon l'invention a pour avantage de répondre aux exigences réglementaires les plus strictes en proposant un dispositif d'ouverture/fermeture qui en position fermée présente un faible encombrement et qui ne dépasse pas de la hauteur du bac de récupération et/ou du dispositif de protection limitant ainsi les risques d'incident.

L'invention est applicable aux citernes en général ainsi qu'aux caisses mobiles citernes, aux wagons citernes, aux conteneurs citernes, aux véhicules citernes pour le transport par voie maritime, par fret, ou encore via le réseau routier.

## Revendications

1. Citerne pour le transport de produits gazeux, liquides ou pulvérulents comportant :
- une cuve dans laquelle un trou d'homme (100) est ménagé, ledit trou d'homme présentant une embase (105) solidaire de la cuve et un couvercle (120) pour obturer le trou d'homme (100), ledit couvercle (120) étant amovible entre une position d'ouverture et une position de fermeture,
- un dispositif d'ouverture/fermeture (200) dudit couvercle présentant
- une partie fixe (210) solidaire de l'embase (105) du trou d'homme (100) ;
- une partie mobile (220) solidaire du couvercle (120) ; ladite citerne étant **caractérisée en ce que** ledit dispositif d'ouverture/fermeture (200) présente additionnellement:
- un élément d'extension (230) mobile et reliant mécaniquement la partie fixe (210) à la partie mobile (220) ;
ladite partie fixe (210), ladite partie mobile (220) et ledit élément d'extension comportant des moyens pour réaliser une liaison pivot et une liaison glissière entre le couvercle (120) et l'embase (105) du trou d'homme (100) ;
la partie mobile (220) solidaire du couvercle (120) étant configurée pour coulisser verticalement par rapport à l'élément d'extension (230) entre une position basse et une position haute ;
ledit élément d'extension (230) étant configuré pour coulisser verticalement par rapport à ladite partie fixe (210) solidaire de l'embase (105) du trou d'homme (100), entre une position basse et une position haute ;
ladite partie mobile (220) solidaire du couvercle (120) est configurée pour être mobile en rotation par rapport à l'élément d'extension (230).

2. Citerne selon la revendication précédente **caractérisée en ce qu'**elle comporte un obstacle (110) positionné autour du trou d'homme et **en ce que** l'encombrement dudit dispositif d'ouverture/fermeture (200), lorsque le couvercle (120) est en position de fermeture, est inférieur à la hauteur de l'obstacle (110).

3. Citerne selon la revendication 2 **caractérisée en ce que** ledit obstacle est un bac de récupération des fluides et/ou un dispositif de protection du trou d'homme.

4. Citerne selon l'une des revendications 1 à 3 **caractérisée en ce que** ledit couvercle (120) présente une ouverture à 180° par rapport à sa position de fermeture.

5. Citerne selon l'une des revendications 1 à 4 **caractérisée en ce que** ladite citerne est un véhicule citerne, ou une caisse mobile citerne, ou un conteneur citerne ou un wagon citerne.

## Patentansprüche

1. Zisterne für den Transport gasförmiger, flüssiger oder pulverförmiger Produkte, aufweisend:
- einen Behälter, in dem ein Mannloch (100) ausgebildet ist, wobei das Mannloch eine mit dem Behälter verbundene Basis (105) und einen Deckel (120) aufweist, um das Mannloch (100) zu verschließen, wobei der Deckel (120) zwischen einer geöffneten Position und einer geschlossenen Position bewegbar ist,
- eine Öffnungs-/Schließvorrichtung (200) des Deckels, aufweisend
- einen festen Teil (210), der mit der Basis (105) des Mannlochs (100) fest verbunden ist;
- einen beweglichen Teil (220), der mit dem Deckel (120) fest verbunden ist;
wobei die Zisterne **dadurch gekennzeichnet ist, dass** die Öffnungs-/Schließvorrichtung (200) zusätzlich aufweist:
- ein Erweiterungselement (230), das beweglich ist und den festen Teil (210) mit dem beweglichen Teil (220) mechanisch verbindet;
wobei der feste Teil (210), der bewegliche Teil (220) und das Erweiterungselement Mittel aufweisen, um eine Drehzapfenverbindung und eine Gleitschienenverbindung zwischen dem Deckel (120) und der Basis (105) des Mannlochs (100) herzustellen;
wobei der bewegliche Teil (220), der mit dem Deckel (120) fest verbunden ist, ausgelegt ist, um in Bezug auf das Erweiterungselement (230) zwischen einer niedrigen Position und einer hohen Position vertikal zu gleiten;
wobei das Erweiterungselement (230) ausgelegt ist, um in Bezug auf den festen Teil (210), der mit der Basis (105) des Mannlochs (100) fest verbunden ist, zwischen einer niedrigen Position und einer hohen Position vertikal zu gleiten;
wobei der bewegliche Teil (220), der mit dem Deckel (120) fest verbunden ist, ausgelegt ist, um in Bezug auf das Erweiterungselement (230) rotatorisch beweglich zu sein.

2. Zisterne nach vorangehendem Anspruch, **dadurch gekennzeichnet, dass** sie ein Hindernis (110) aufweist, das um das Mannloch positioniert ist und dass die Abmessungen der Öffnungs-/Schließvorrichtung (200), wenn der Deckel (120) in geschlossener Position ist, kleiner als die Höhe des Hindernisses (110) ist.

3. Zisterne nach Anspruch 2, **dadurch gekennzeichnet, dass** das Hindernis ein Fluidrückgewinnungsbehälter und/oder eine Schutzvorrichtung des Mannlochs ist.

4. Zisterne nach einem der Ansprüche 1 bis 3, **dadurch gekennzeichnet, dass** der Deckel (120) eine Öffnung von 180° in Bezug auf seine geschlossene Position aufweist.

5. Zisterne nach einem der Ansprüche 1 bis 4, **dadurch gekennzeichnet, dass** die Zisterne ein Zisternenfahrzeug oder ein beweglicher Zisternenkasten oder ein Zisternencontainer oder ein Zisternenwaggon ist.

## Claims

1. A tank for transporting gas, liquid or powder products including:
- a vessel in which a manhole (100) is provided, said manhole having a base (105) integral with the vessel and a cover (120) to plug the manhole (100), said cover (120) being movable between an opening position and a closing position,
- an opening/closing device (200) for said cover having
- a fixed part (210) integral with the base (105) of the manhole (100);
- a moving part (220) integral with the cover (120); said tank being
**characterised in that** said opening/closing device (200) additionally has:
- a moving extension element (230) mechanically connecting the fixed part (210) to the moving part (220);
said fixed part (210), said moving part (220) and said extension element including means for making a pivot connection and a slide connection between the cover (120) and the base (105) of the manhole (100);
the moving part (220) integral with the cover (120) being configured to vertically slide with respect to the extension element (230) between a bottom position and a top position;
said extension element (230) being configured to vertically slide with respect to said fixed part (210) integral with the base (105) of the manhole (100), between a bottom position and a top position;
said moving part (220) integral with the cover (120) is configured to be rotatably movable with respect to the extension element (230).

2. The tank according to the preceding claim, **characterised in that** it includes an obstacle (110) positioned about the manhole and **in that** the size of said opening/closing device (200), when the cover (120) is in the closing position, is lower than the height of the obstacle (110).

3. The tank according to claim 2, **characterised in that** said obstacle is a fluid drain pan and/or a protective device for the manhole.

4. The tank according to one of claims 1 to 3, **characterised in that** said cover (120) has an opening at 180° with respect to its closing position.

5. The tank according to one of claims 1 to 4, **characterised in that** said tank is a tank vehicle, or a tank swap body, or a tank container or a tank car.
